# EUROPÄISCHE PATENTSCHRIFT

(11) **EP 3 397 414 B1**
(45) Veröffentlichungstag und Bekanntmachung des Hinweises auf die Patenterteilung: **02.04.2025**
(21) Anmeldenummer: 16826007.3
(22) Anmeldetag: 29.12.2016
(51) Int. Cl.: F15B 1/10, B29C 64/112, B33Y 80/00

(54) **VERFAHREN ZUM HERSTELLEN VON HYDROSPEICHERN**
METHOD FOR PRODUCING AN HYDRAULIC ACCUMULATOR
PROCÉDÉ DE FABRICATION D'ACCUMULATEUR HYDRAULIC

(30) Priorität: 31.12.2015 DE 102015017026
(43) Veröffentlichungstag der Anmeldung: 07.11.2018
(60) Teilanmeldung: 18202113.9
(73) Patentinhaber: Hydac Technology GmbH, 66280 Sulzbach (DE)
(72) Erfinder: KLOFT, Peter, 56235 Ransbach-Baumbach (DE); BALTES, Herbert, 66679 Losheim (DE)
(74) Vertreter: Bartels, Martin Erich Arthur
(86) Internationale Anmeldenummer: PCT/EP2016/002187
(87) Internationale Veröffentlichungsnummer: WO 2017/114595

(56) Entgegenhaltungen:
- EP-A2- 3 056 792
- WO-A1-2015/142862
- WO-A1-2016/120571
- WO-A1-2016/138996
- DE-A1- 102007 003 723
- DE-A1- 102009 021 463
- DE-A1- 3 111 410
- US-A1- 2015 267 812

## Beschreibung

Die Erfindung betrifft ein Verfahren zum Herstellen von Hydrospeichern und deren Teilen.

Hydraulikspeicher, die fachsprachlich auch mit Hydrospeicher bezeichnet werden, dienen grundsätzlich dazu, Druckenergie zu speichern. Bei den gewichts- und federbelasteten, mechanischen Hydrospeichern erfolgt dies durch eine Veränderung von potentieller Energie, wohingegen die gasbelasteten Speicher die innere Energie eines Arbeitsgases verändern. Je nach Ausgestaltung ihres Trennelementes, mit dem innerhalb des Speichergehäuses sich verschiedene Fluide voneinander separieren lassen, unterscheidet man zwischen Membranspeichern, Kolbenspeichern, Blasenspeichern und Balgspeichern. Grundsätzlich beruht die Wirkungsweise dieser Speicher darauf, dass die Kompressibilität eines Gases zur Flüssigkeitsspeicherung ausgenutzt wird. Dabei dient regelmäßig Stickstoff als Energiemedium. Verfügt der Hydrospeicher über kein Trennelement, handelt es sich regelmäßig um eine bekannte Windkesselkonstruktion.

Die vorstehend bezeichneten Hydrospeicher und ihre Trennelemente lassen sich vielfältigst herstellen. Neben einer spanabhebenden Formgebung für das Speichergehäuse lässt sich dieses auch gießtechnisch erhalten. Zusehends kommen auch Druckbehälter zum Einsatz, die in sogenannter Composite-Bauweise hergestellt sind, um dergestalt bei geringen Materialeintragskosten gleichzeitig ein niedriges Baugewicht nebst hoher Strukturfestigkeit für den Speicher zu erreichen. So offenbart die DE 10 2014 008 649 A1 ein Verfahren zum Herstellen eines solchen Druckbehälters, vorzugsweise in der Art eines Blasenspeichers, bei dem zunächst eine Tragstruktur, insbesondere in Form eines Liners bereitgestellt wird, auf die ein Fasermaterial unter Bildung einer Grundstruktur aufgebracht wird, die wiederum in eine beheizbare Formeinrichtung eingebracht das Einbringen einer Matrix zwischen der Formeinrichtung und der Grundstruktur ermöglicht, die in das Fasermaterial zumindest teilweise eindringt und entsprechend ausgehärtet nach Entformen das Speichergehäuse eines Blasenspeichers ergibt.

Dieses an sich sehr vorteilhafte Verfahren, das zu Speichergehäusen mit hoher Druckfestigkeit bei besonders geringem Baugewicht führt, ist insoweit nachteilig, als eben für jeden Speichertyp eine eigenständige Formeinrichtung zu schaffen ist, was in diesem Umfang die Herstellkosten deutlich erhöht. Auch benötigt das Aushärten der Matrix in der beheizbaren Form neben dem Energieaufwand für die Formheizung auch Herstellzeit, trotz der relativ kurzen Reaktionszeiten eines reaktiven Harzsystemes für die Matrix. Ferner ist der händische Aufwand für die Handhabung der Formeinrichtung nicht zu unterschätzen.

Die WO 2015/142862 A1 offenbart ein Verfahren zum Herstellen von Druckbehältern, einschließlich Druckspeichern, wobei diese zumindest teilweise mittels eines 3D-Druckverfahrens hergestellt werden.

Die US 2015/0267812 A1 offenbart ein Kolbengehäuse. Aus der DE 10 2007 003 723 A1 geht ein Hydrospeicher mit einer im 3D-Druck hergestellten Trennmembran hervor. Die DE 31 11 410 A1 zeigt einen hydropneumatischen Speicher auf. Die WO 2016/138996 A1 beschreibt eine Kolonne. Aus der EP 3 056 792 A2 geht ein Druckbehälter hervor. Die WO 2016/120571 A1 betrifft ein kapazitives System. Ein Hydrospeicher geht aus der DE 10 2009 021 463 A1 hervor.

Ausgehend von diesem Stand der Technik liegt daher der Erfindung die Aufgabe zugrunde, Speichergehäuse mit hoher Druckfestigkeit herzustellen bei vermindertem händischem Aufwand und bei reduzierten Formgebungskosten.

Eine dahingehende Aufgabe löst ein Verfahren mit den Merkmalen des Patentanspruchs 1 in seiner Gesamtheit.

Gemäß dem Kennzeichen von Anspruch 1 ist vorgesehen, dass als Materialien für den 3D-Druck Kunststoffe verwendet werden, und dass unmittelbar im 3D-Druckverfahren eine Trennmembran direkt an das untere Gehäuseteil jedoch ohne einen Befestigungsring angeformt wird.

Dadurch, dass die Hydrospeicher und gegebenenfalls deren Teile zumindest teilweise mittels eines 3D-Druckverfahrens hergestellt werden, kann auf eine Formeinrichtung, wie ein zu beheizendes Formwerkzeug, vollständig verzichtet werden. Vielmehr lassen sich ein Speichergehäuse oder Teile dahingehender Hydrospeicher, wie Trennelemente, formwerkzeugfrei herstellen, was auch den händischen Aufwand bei der Herstellung deutlich reduziert.

Durch das erfindungsgemäße 3D-Druckverfahren lassen sich nahezu alle Formen von Hydrospeichern realisieren, und zwar in frei formender Weise, so dass eine Vielzahl von Gestaltungsmöglichkeiten realisierbar ist, wobei man dergestalt relativ frei ein Speichergehäuse auch an spezielle Einbausituationen vor Ort anpassen kann, so dass man nicht immer auf symmetrische Speichergehäuse zurückgreifen muss. Insbesondere im Rahmen der Realisierung von Membranspeichern lassen sich dergestalt eine Vielzahl neuer Gestaltungsformen finden, die sich an Einbauräume vor Ort anpassen lassen. Vor allem kann man mit nur einer 3D-Druck-Herstelleinrichtung eine Vielzahl von verschiedenen Hydrospeichern realisieren, die sich auch von der Speichergröße her unterscheiden können. Man kann also mit nur einer Herstelleinrichtung eine Vielzahl von Speichern drucken, was so keine Entsprechung im Stand der Technik hat. Dergestalt lassen sich mittels 3D-Druckverfahren mit geringem Herstellaufwand bei Einhalten relativ kurzer Herstellzeiten druckstabile Speichereinrichtungen mit jedweder Gestalt schaffen.

Ferner können die Anschlussstellen an den Hydrospeichergehäusen gleich mitgestaltet werden oder als separate Einbauteile konzipiert werden.

Da 3D-Herstelldruckmaschinen immer kostengünstiger werden und wenig Platz beanspruchen sowie bei entsprechender Softwareausstattung auch einem Laien ermöglichen, Druckerzeugnisse herzustellen, wäre es denkbar, die Behältererzeugung an den Herstellort des Kunden zu verlagern, der solche Druckbehälter, wie Druckspeicher, in seiner Fertigung benötigt. Dergestalt ließen sich dann die Druckbehälter "just in time" in die Hauptfertigung beim Kunden mit einschleusen, der solche Speicherprodukte für seine Produkterstellung benötigt.

Da mittels eines 3D-Druckverfahrens sich nicht nur Kunststoffe verarbeiten lassen, sondern auch durchaus Metallwerkstoffe, können beide Materialien für die Erstellung des Hydrospeichers Verwendung finden, so dass nochmals in weitergezogenem Rahmen sich Speicherrealisierungen nach Kundenvorgaben verwirklichen lassen.

Weitere vorteilhafte Ausführungsformen des erfindungsgemäßen Verfahrens sind Gegenstand der weiteren Unteransprüche.

Im Folgenden wird das erfindungsgemäße Verfahren zum Herstellen von Hydrospeichern anhand mehrerer Ausführungsbeispiele nach der Zeichnung näher erläutert. Dabei zeigen in prinzipieller und nicht maßstäblicher Darstellung die
- Fig. 1 und 2: einmal in Schnittdarstellung, einmal in Draufsicht ein Ausführungsbeispiel eines Druckbehälters in der Art eines Windkessels oder Helmholtz-Resonators;
- Fig. 3, 4 und 5: jeweils in einer Schnittdarstellung einzelne Herstellschritte betreffend einen Membranspeicher;
- Fig. 6 und 7: in der Art einer Längsschnittdarstellung verschiedene Herstellstadien für einen Kolbenspeicher als Unterfall eines Druckbehälters; und
- Fig. 8: in Längsschnittdarstellung das Speichergehäuse eines weiteren Druckbehälters in Form eines Blasenspeichers.

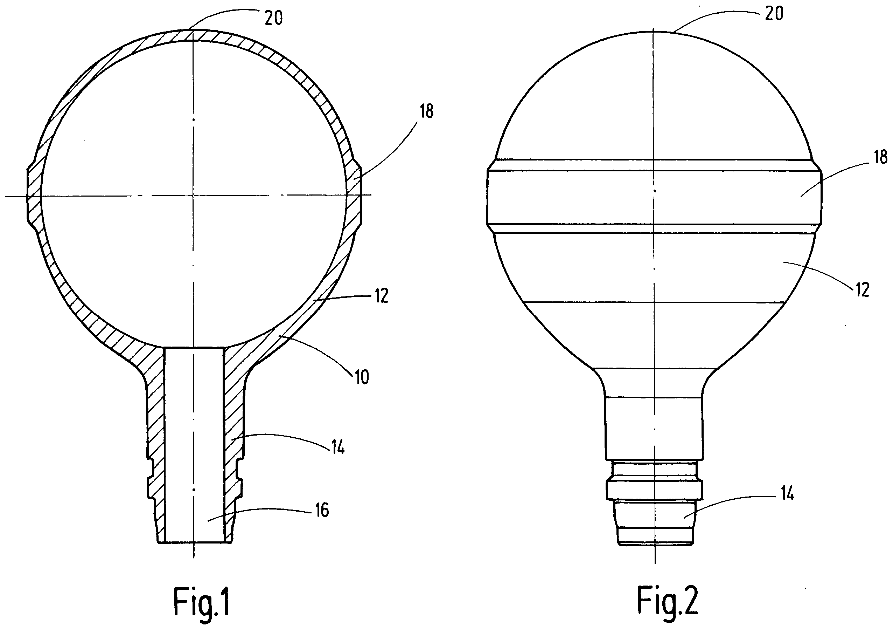

Die Ausführungsformen der Fig. 1 bis 8 dienen lediglich der Erläuterung des Hintergrundes der Erfindung und sind nicht Gegenstand eines Anspruches.

Als 3D-Druckverfahren zum Herstellen von Druckbehältern nebst deren Teilen eignen sich grundsätzlich Sinter- und Pulverdruckverfahren, die Stereolithografie sowie das Drucken mit flüssigen Komponenten. Alle vorstehenden 3D-Druckverfahren finden auch häufig im Rapid Prototyping Verwendung.

Sofern Objekte, wie Speichergehäuse, ausschließlich aus Metall aufgebaut werden sollen, hat sich das sogenannte Elektronenstrahlschmelzen als 3D-Druckverfahren geeignet erwiesen. Bei dem Elektronenstrahlschmelzen (Electron Beam Melting) wird Metallpulver schichtweise aufgeschmolzen und als Gehäusewand abgetragen. Ebenso geeignet ist das selektive Laserschmelzen, bei dem ein Metallpulver lediglich lokal aufgeschmolzen wird. Gleichfalls möglich ist der Einsatz des selektiven Lasersinterns, bei dem ein Metallpulver mit einem Laser kurzzeitig derart erhitzt wird, dass dieses schmilzt, wobei es sich anschließend wieder unter Bildung des metallischen Speichergehäuses verfestigt. Alle vorstehend genannten 3D-Druckverfahren gehören der Gattung der Sinter- und Pulverdruckverfahren an.

Soweit der Druckbehälter unter Einsatz von Kunststoffmaterialien gedruckt werden soll, bietet sich das Drucken mit flüssigen Kunststoffmaterialien an. Hier hat sich insbesondere das Multi-Jet Modeling bewährt, das vom grundsätzlichen Aufbau her stark an einen herkömmlichen Tintenstrahldruck erinnert. Bei dem dahingehenden 3D-Druckverfahren wird flüssiges Kunststoffmaterial aus einer Düse stammend aufgetragen, die sich bevorzugt in mehreren Richtungen bewegen kann, und sobald das Material formend aus der Düse austritt, wird es unter einer Energiequelle entsprechend gehärtet, beispielsweise in Form von UV-Licht.

Mit dem Multi-Jet Modeling werden Kunststoffmaterialien in Tröpfchenform im Umfang weniger Piktoliter abgegeben, wobei das Sprühen der Tröpfchen vorzugsweise rechnergesteuert mit einer hohen Taktfrequenz von beispielsweise 2 kHz erfolgt. Als besonders geeignete Kunststoffmaterialien haben sich verflüssigte Acrylate erwiesen, deren Viskosität durch Zusatz eines Reaktiv-Verdünners in gewünschter Weise eingestellt werden kann. Vorzugsweise wird durch die Zugabe eines Photoinitiators die Härtbarkeit mittels der UV-Strahlung begünstigt. Bei einem Beispiel für einen Gehäusewerkstoff enthält das Kunststoffmaterial als Acrylatwerkstoff 90 % Ebecryl 4835, ein von der Firma UCB hergestelltes Prepolymer, 8 % HDDA (Firma UCB) als Reaktiv-Verdünner zur Viskositätseinstellung und 2 % Darocur 1173, hergestellt von der Firma Ciba-Geigy, als Photoinitiator.

Bei einem anderen Beispiel sind als Gehäusematerial Acrylatwerkstoffe 90 % Ebecryl 4835 sowie 4 % Ebecryl 230 der Firma UCB vorgesehen. Als Reaktiv-Verdünner sind 4 % HDDA der Firma UCB und als Photoinitiator 2 % Darocur 1173 der Firma Ciba-Geigy enthalten.

Mit den vorstehend näher bezeichneten Kunststoffmaterialien oder anderen geeigneten Kunststoffmaterialien lassen sich im 3D-Druckverfahren Speichergehäuse 10 aufbauen, wie es beispielhaft für einen Druckbehälter 12 in der Art eines Windkessels oder Helmholtz-Resonators zur Pulsationsdämpfung von Fluiden gemäß den Darstellungen in den Fig. 1 und 2 aufgezeigt ist. An das Speichergehäuse 10 ist am unteren Ende eine Fluid-Anschlussstelle 14 einstückig angebracht mit einer speziellen Anschlussgeometrie zwecks Anschließen des Druckbehälters 12 in üblicher Weise an einen Fluid-, insbesondere Gasversorgungskreislauf. Das Speichergehäuse 10 bildet im Wesentlichen einen kugelförmigen Querschnitt aus, in den die Fluid-Anschlussstelle 14 über einen zentralen Kanal 16 medienführend eintritt. Das Speichergehäuse 10 hat im Wesentlichen einen gleichbleibenden Wanddurchmesser, ist jedoch in der Mitte mit einer entsprechenden ringförmigen Verstärkung 18 im Äquatorbereich versehen. Dahingehende Druckbehälter 12 lassen sich auch mittels eines Metallpulvers drucken und sind dann durchaus bis 350 bar in dieser Ausgestaltung druckfest, bei regelmäßigen Einsatz- oder Arbeitstemperaturen von 40 °C bis 150 °C.

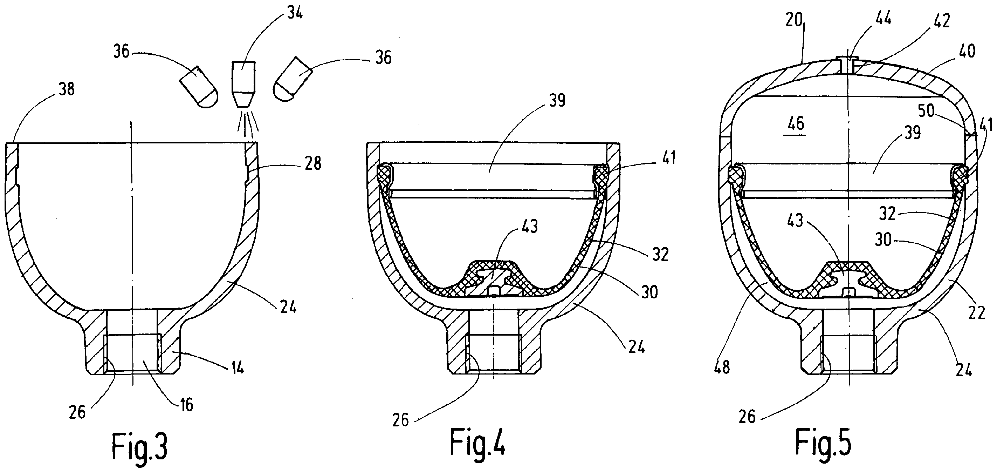

In Blickrichtung auf die Fig. 1 und 2 gesehen, beginnt der 3D-Druck-Materialaufbau entweder vom unteren Ende her, also beginnend am freien Ende der Fluid-Anschlussstelle 14 oder auf der oberen Abschlussseite 20 des Druckbehälters 12. Mit nur einer 3D-Druckherstelleinrichtung lässt sich ein solcher Druckbehälter 12 in allen Größen herstellen, auch mit veränderten Querschnittsformen (oval, mehreckig etc.) und verschiedensten Anschlussstellen (nicht dargestellt). Mit derselben Herstelleinrichtung lassen sich dann auch die anderen Speichergeometrien drucken gemäß den Darstellungen nach den Fig. 3 ff. Des Weiteren kann der in den Fig. 1 und 2 dargestellte Druckbehälter 12, insbesondere wenn er aus Kunststoffmaterialien gedruckt worden ist, auch noch für Anwendungen im Hochdruckbereich mit zusätzlichen Verstärkungen versehen werden, beispielsweise könnte man auf dessen Außenseite, was nicht näher dargestellt ist, ein Stützlaminat aufbringen oder die Außenseite des gedruckten Druckbehälters 12 mit Umfassungsbändern, beispielsweise aus Karbonmaterialien, versehen.

Bei den nachfolgenden Ausführungsbeispielen werden dieselben Komponenten wie vorstehend wiedergegeben mit denselben Bezugsziffern versehen. Das in den Fig. 3 bis 5 gezeigte Ausführungsbeispiel betrifft einzelne Herstellschritte zum Herstellen eines Membranspeichers 22, wie er in der Fig. 5 in Längsschnittdarstellung wiedergegeben ist. Zunächst wird gemäß der Darstellung nach der Fig. 3 in einem ersten Arbeits- oder Herstellschritt das untere Gehäuseteil 24 im 3D-Druckverfahren hergestellt. Das dahingehende Gehäuseteil 24 ist in der Art einer Schale ausgebildet und weist an seiner Unterseite wiederum eine Fluid-Anschlussstelle 14 mit einem medienführenden Kanal 16 auf. In Richtung des Kanals 16 weisend ist am unteren Ende der Fluid-Anschlussstelle 14 in diese innenumfangsseitig ein Gewinde 26 nachträglich in spanender Weise eingebracht. Das dahingehende Gewinde 26 dient wiederum dazu, das Speichergehäuse 10 mit dem unteren Gehäuseteil 24 an einen nicht näher dargestellten Fluid-, insbesondere Hydraulikkreis anzuschließen. In den oberen Bereich des unteren Gehäuseteils 24 ist eine umlaufende Ringnut 28 eingebracht, die dem späteren Einbringen eines Trennelementes 30 in Form einer schalenförmigen Trennmembran 32 dient.

Die Herstellung des unteren Gehäuseteiles 24 im 3D-Druckverfahren erfolgt mittels einer Auftragdüse 34, die mit hoher Taktfrequenz, beispielsweise 2 kHz, das Kunststoffmaterial im Piktoliter-Bereich zwecks Herstellen des unteren Gehäuseteils 24 abgibt. In Blickrichtung auf die Fig. 3 gesehen, sind zur Vervollständigung der Multi-Jet-Modeling-Einrichtung zwei UV-Lampen 36 vorhanden, die das aufgespritzte Kunststoffmaterial entsprechend aushärten. Die Maschineneinheit bestehend aus Auftragdüse 34 und UV-Lampen 36 lässt sich mittels einer nicht näher dargestellten Einstelleinrichtung in allen drei Raumachsen frei bewegen. Im vorliegend gezeigten Fall wird das Druckverfahren bei schichtweisem Auftrag mit der Fluid-Anschlussstelle 14 begonnen und endet wie dargestellt am oberen Rand 38 des unteren Gehäuseteiles 24.

Wie die Fig. 4 dann weiter zeigt, wird die Trennmembran 32 mit einem Befestigungsring 39 in das untere Gehäuseteil 24 eingebracht und eine am oberen Rand vorhandene Randverstärkung 41 der Trennmembran 32 greift in festlegender Weise in die Ringnut 28 des unteren Gehäuseteiles 24 ein. Wie die Darstellung nach den Fig. 4 und 5 weiter zeigt, ist am unteren Ende der Trennmembran 32 ein Ventilteller 43 eingebracht, der den Fluid- oder Medienkanal 16 in Richtung des Speichergehäuseinneren verschließen kann. Insoweit ist die Trennmembran 32 elastisch nachgiebig ausgebildet; ein konstruktiver Aufbau, der bei solchen Membranspeichern 22 üblich ist und sich bewährt hat. Der Befestigungsring 39 ist federelastisch nachgiebig ausgebildet und drückt mit seiner offenen Profil- oder Querschnittsform die Randverstärkung 41 in Richtung der Ring- oder Aufnahmenut 28 im Speichergehäuse 10.

Es ist vorstellbar, die Trennmembran 32 beispielsweise aus einem medienbeständigen Material, wie Polytetrafluorethylen, gleichfalls im 3D-Druckverfahren herzustellen, um diese dann wiederum mit dem Befestigungsring 39, der gegebenenfalls auch im 3D-Druckverfahren hergestellt ist, in dem unteren Gehäuseteil 24 festzulegen. Erfindungsgemäß wird unmittelbar im 3D-Druckverfahren die Trennmembran 32 direkt an das untere Gehäuseteil 24 jedoch ohne Befestigungsring 39 angeformt. Dergestalt ließe sich dann der gesamte Speicher in Form des Membranspeichers 22 mit nur einer Herstellmaschine im 3D-Druckverfahren erzeugen. Bei entsprechend präzise arbeitenden 3D-Druckverfahren besteht darüber hinaus die Möglichkeit, über das Druckverfahren selbst das Gewinde 26 an der Fluid-Anschlussstelle 14 zu generieren. Ein weiter geeignetes Material zum Herstellen eines Trennelementes, wie beispielsweise eine Trennmembran 32, ist thermoplastisches Polyurethan (TPU), das sich mit einem 3D-Druckverfahren verarbeiten lässt.

Ist der Zwischenherstellschritt nach der Fig. 4 erreicht, wird dann der Membranspeicher 22 durch das 3D-Druckverfahren vervollständigt, indem dann das obere Gehäuseteil 40 dem unteren Gehäuseteil 24 nachfolgend gedruckt wird. Auf der oberen Abschlussseite 20 des Speichergehäuses 10 wird dann eine Durchlassstelle 42 nachträglich mechanisch eingebracht oder im Druckverfahren freigelassen, die mit einem Stopfen 44, der gleichfalls gedruckt werden kann, verschlossen wird. Dergestalt lässt sich auf die Gasseite 46 des Speichers 22 ein Energiespeicher einbringen, beispielsweise in Form eines Arbeitsgases, wie Stickstoffgas, und dort bevorraten. Das Trennelement 30 in Form der Trennmembran 32 trennt dann die dahingehende Gasseite 46 von der Flüssigkeits-, insbesondere Hydraulikseite 48 des Speichers 22.

Die Gehäuseteile 24 und 40 können, auch wenn sie im 3D-Druckverfahren hergestellt sind, separat erstellt werden und lassen sich dann beispielsweise an einer Trennstelle 50 entlang des oberen Randes 38 verlaufend mittels einer Schweiß- oder Klebstoffverbindung miteinander verbinden. Dergestalt lässt sich die Speicherkonstruktion in einem sehr weiten Bereich an praktische Gegebenheiten auch vor Ort anpassen.

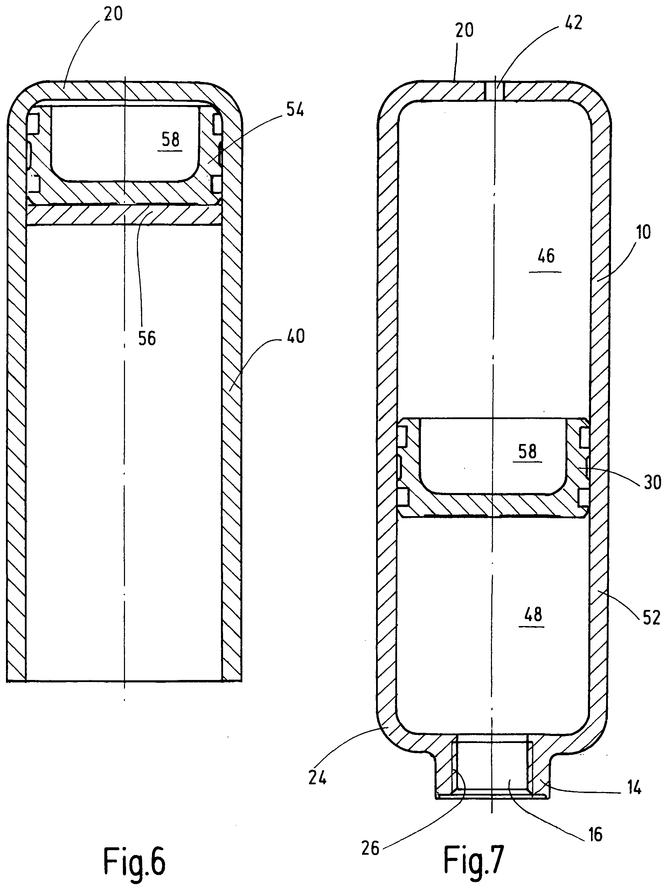

Die folgenden Fig. 6 und 7 zeigen nun die Ausbildung eines nicht erfindungsgemäßen Kolbenspeichers 52 im 3D-Druckverfahren. Zunächst wird in einem ersten Herstellschritt gemäß der Darstellung nach der Fig. 6 das obere Gehäuseteil 40 gedruckt, beispielsweise mittels den bereits beschriebenen 3D-Druckverfahren. Das obere Gehäuseteil 40 ist auf seiner oberen Abschlussseite 20 geschlossen ausgebildet und weist im Wesentlichen dieselbe Wandstärke auf. In das obere Gehäuseteil 40 wird dann das Trennelement 30 diesmal in Form eines Trennkolbens 54 eingesetzt. Die üblichen Dicht- und Führungssysteme für den Trennkolben 54 sind der Einfachheit halber weggelassen. Wiederum kann der Trennkolben 54 gleichfalls in einem 3D-Druckverfahren hergestellt sein. So kann das Speichergehäuse 10 aus einem Metallwerkstoff und der Trennkolben 54 aus Gewichtsgründen heraus aus einem Kunststoffmaterial gedruckt sein.

Gemäß der Darstellung nach der Fig. 6 kann dann unterhalb des Trennkolbens 54 mittels eines plattenförmigen Abschlussteils 56 der freie Zugang zum Trennkolben 54 in hermetisch dichtender Weise verschlossen sein. Im dahingehenden Einsatzzustand des Abschlussteils 56 besteht dann die Möglichkeit einer Innenwandbearbeitung für das obere Gehäuseteil 40. Dergestalt lassen sich Unsauberkeiten beim 3D-Drucken mechanisch (spanend), thermisch oder chemisch beseitigen, ohne dass durch Verschmutzungspartikel, die nicht näher dargestellten Dicht- und Führungssysteme des Trennkolbens 54 in Mitleidenschaft gezogen werden. Auch die Lauffläche des Trennkolbens 54 lässt sich vor dem Einsetzen in das Speichergehäuse 10 oder das Gehäuseteil 40 mechanisch nachbearbeiten.

Da regelmäßig das Abschlussteil 56 in seiner Position im oberen Gehäuseteil 40 nach der Fig. 6 sich nur schwer beseitigen lässt, kann zunächst auch das Speichergehäuse 10 fertig gedruckt werden, d. h., das untere Gehäuseteil 24 mit Fluid-Anschlussstelle 14 nebst Kanal 16 und Gewinde 26 wird nachträglich durch 3D-Druck erstellt und schließt sich insoweit einstückig an die Gehäusewandstruktur des oberen Gehäuseteils 40 an. Da das stopfenartige Abschlussteil 56 dann die Bewegung des Trennkolbens 54 beeinträchtigen würde, wird das Abschlussteil 56 im geschlossenen Speichergehäuse 10 nach der Fig. 7 thermisch oder chemisch zerstört, und die Reste des Abschlussteiles 56 können über die Fluid-Anschlussstelle 14 von der Flüssigkeitsseite des Kolbenspeichers 52 nach außen abgeführt werden, bevor der Kolbenspeicher 52 wiederum für einen sinnfälligen Gebrauch an ein Hydrauliknetz oder dergleichen angeschlossen wird. Um das Volumen auf der Gasseite 46 des Kolbenspeichers 52 zu erhöhen, weist der Trennkolben 54 eine Ausnehmung 58 auf. Des Weiteren wird für das Einfüllen des Arbeitsgases auf der Gasseite 46 das Speichergehäuse 10 auf der oberen Abschlussseite 20 wiederum mit einer Durchlassstelle 42 in Form einer Bohrung versehen.

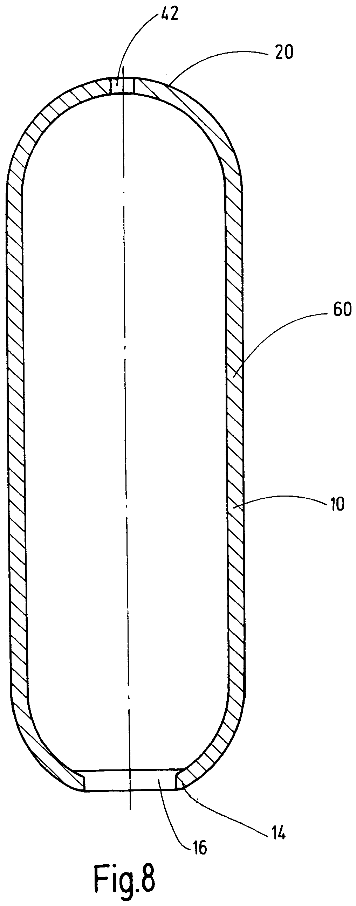

Bei der letzten Ausführungsform eines nicht erfindungsgemäßen Druckbehälters 12 ist in der Fig. 8 das Speichergehäuse 10 eines Blasenspeichers 60 dargestellt, wobei das Speichergehäuse 10 hier wiederum als Ganzes im 3D-Druckverfahren hergestellt worden ist. Das Speichergehäuse 10 weist an seinem unteren Ende eine Fluid-Anschlussstelle 14 mit derart großem Kanalquerschnitt 16 auf, dass nachträglich in den derart geschaffenen Behälter eine nicht näher dargestellte Membran oder Speicherblase als Trennelement 30 eingesetzt werden kann. Auch hier sind wieder Varianten denkbar, bei denen die nicht näher dargestellte Speicherblase ein integrales und nicht austauschbares Element des Gesamt-Blasenspeichers 60 ist. Auf der oberen Abschlussseite 20 des Speichergehäuses ist wiederum eine Durchlassstelle 42 angeordnet, über die man die Gasseite der Speicherblase entsprechend befüllen kann.

Das Speichergehäuse 10 gemäß der Darstellung nach der Fig. 8 kann auch ein Liner sein, der zur Vervollständigung und Verstärkung mit einem Fasergelege (nicht dargestellt) umwickelt sein kann. Auch lässt sich als Trennelement 30 für einen nicht dargestellten Balgspeicher eine Balgmembran im 3D-Druck, auch aus Metall, herstellen.

## Patentansprüche

1. Verfahren zum Herstellen von Hydrospeichern (22) und deren Teilen (30), wobei zumindest ein unteres Gehäuseteil (24) mittels eines 3D-Druckverfahrens hergestellt wird, als Materialien für den 3D-Druck Kunststoffe verwendet werden, und unmittelbar im 3D-Druckverfahren eine Trennmembran (32) direkt an das untere Gehäuseteil (24) jedoch ohne einen Befestigungsring (39) angeformt wird.

2. Verfahren nach Anspruch 1, **dadurch gekennzeichnet, dass** das Gesamtgehäuse (10) mittels 3D-Druck fertiggestellt wird.

3. Verfahren nach Anspruch 1 oder 2, **dadurch gekennzeichnet, dass** bei der Erstellung einer jeweiligen Gehäusewand oder deren Teilen die Fluid-Anschlussstellen (16) durch 3D-Druck mit erstellt werden.

4. Verfahren nach einem der vorstehenden Ansprüche, **dadurch gekennzeichnet, dass** zumindest die Innenwandflächen eines Teiles der im 3D-Druck hergestellten Gehäuseteile (24, 40) mechanisch, thermisch oder chemisch nachbehandelt werden.

## Claims

1. Method for manufacturing hydraulic accumulators (22) and parts (30) thereof, at least one lower housing part (24) being manufactured by means of a 3D printing method, plastics materials being used for 3D printing, and, during the 3D printing method itself, a separating diaphragm (32) being moulded directly onto the lower housing part (24), but without a fixing ring (39).

2. Method according to claim 1, **characterised in that** the overall housing (10) is completed by means of 3D printing.

3. Method according to either claim 1 or claim 2, **characterised in that** the fluid connection points (16) are also created by 3D printing when creating a respective housing wall or parts thereof.

4. Method according to any of the preceding claims, **characterised in that** at least the inner wall surfaces of some of the housing parts (24, 40) manufactured in 3D printing are post-treated by mechanical, thermal or chemical means.

## Revendications

1. Procédé de fabrication d'accumulateur (22) hydraulique et de leurs parties (30), dans lequel on fabrique au moins une partie (24) d'enveloppe inférieure au moyen d'un procédé d'impression en 3D,
on utilise des matières plastiques comme matériau pour l'impression en 3D, et
on forme directement dans le procédé d'impression en 3D une membrane (32) de séparation directement sur la partie (24) d'enveloppe inférieure, toutefois sans un anneau (39) de fixation.

2. Procédé suivant la revendication 1, **caractérisé en ce que** l'on finit toute l'enveloppe (30) au moyen d'une impression en 3D.

3. Procédé suivant la revendication 1 ou 2, **caractérisé en ce que**, lors de la création d'une paroi respective de l'enveloppe ou de ses parties, on crée les points (16) de raccordement de fluide par impression en 3D.

4. Procédé suivant l'une des revendications précédentes, **caractérisé en ce qu'**au moins les surfaces de paroi intérieure d'une partie des parties (24, 40) d'enveloppe fabriquées dans l'impression en 3D sont retraitées mécaniquement, thermiquement ou chimiquement.
